# FASCICULE DE BREVET EUROPEEN

(11) **EP 2 406 431 B1**
(45) Date de publication et mention de la délivrance du brevet: **06.05.2015**
(21) Numéro de dépôt: 10714932.0
(22) Date de dépôt: 09.03.2010
(51) Int. Cl.: E01B 3/42, C08L 27/06, E01B 3/28, E01B 26/00, E01B 3/00

(54) **SEMELLE D'APPUI POUR TRAVERSES DE CHEMIN DE FER COMPRENANT UNE RÉSINE PVC**
LAGERPLATTE FÜR EISENBAHNSCHWELLEN MIT PVC-HARZ
BEARING PLATE FOR RAILWAY SLEEPERS INCLUDING A PVC RESIN

(30) Priorité: 11.03.2009 FR 0951532
(43) Date de publication de la demande: 18.01.2012
(73) Titulaire: Kem One, 69008 Lyon (FR)
(72) Inventeur: KHARIJ, Saloua, F-51100 Reims (FR); ARGEMI FEBRER, Pere, E-08459 Sant Antonio de Vilamajor - Barcelona (ES); GILLOT, Thomas, F-51100 Reims (FR); SAADALLAH, Fares, F-51100 Reims (FR)
(74) Mandataire: Colombet, Alain André
(86) Numéro de dépôt international: PCT/FR2010/050397
(87) Numéro de publication internationale: WO 2010/103226

(56) Documents cités:
- WO-A1-2008/122066
- WO-A2-2007/101968
- ES-A1- 2 166 732
- FR-A1- 2 892 124

## Description

La présente invention a pour objet une semelle d'appui pour traverses de chemin de fer comprenant un mélange spécifique de résine PVC, de plastifiant et d'un polyuréthane thermoplastique.

Une telle semelle d'appui dispose d'une bonne propriété de conservation de rigidité statique suite à des contraintes de compression. Ce compound est constitué de préférence d'un mélange de polymères thermoplastiques et d'élastomères thermoplastiques.

Dans l'industrie ferroviaire, il existe de multiples pièces permettant d'assurer une absorption des vibrations sous les traverses de chemins de fer lors du passage des trains, notamment des trains à haute vitesse.

On peut par exemple retrouver des semelles élastiques d'appui de traverses permettant d'apporter un support flexible, déformable et élastique et d'assurer ainsi un support efficace qui permet de réduire la friction des ballastes et d'éviter les frictions excessives de ces ballastes qui pourraient entraîner une déformation géométrique excessive de la voie ferrée.

De telles semelles sont décrites par exemple dans les demandes ES 1064774 et ES2166732.

Du fait du passage répété des trains, cette pièce peut subir une variation importante de sa rigidité verticale statique et ainsi perdre de ses propriétés absorbantes au fil du temps. Il est donc important de pouvoir disposer d'une semelle d'appui qui allie les qualités nécessaires à l'absorption des vibrations tout en assurant une rigidité verticale la plus constante possible.

Les matériaux actuellement utilisés sont à base de polychlorure de vinyle. Le brevet ES1064774 décrit une composition à base de polychlorure de vinyle et de caoutchouc butadiène-acrylonitrile (NBR) d'une dureté comprise entre 55 et 65 shore A. Cependant avec le développement de trains plus rapides, les sollicitations auxquelles sont soumises ses pièces sont plus contraignantes, d'autant plus qu'une mauvaise absorption des vibrations à haute vitesse peut s'avérer plus dangereuse. C'est pourquoi il est nécessaire de développer des alliages qui disposent de meilleures propriétés notamment une meilleure conservation de la rigidité verticale, pouvant assurer une très longue durée d'utilisation.

La présente invention concerne une semelle d'appui pour traverses de chemin de fer comprenant, en poids, par rapport au poids total de ladite semelle :
- 10 à 50% en poids d'une ou plusieurs résines PVC de Kwert compris entre 50 et 100 ;
- 10 à 45% en poids d'un ou plusieurs plastifiants ;
- 15 à 60% en poids d'un composé thermoplastique polyuréthane.

La semelle d'appui selon l'invention permet d'atteindre d'excellentes valeurs de conservation de rigidité verticale.

La semelle d'appui selon l'invention permet ainsi d'apporter un support flexible, déformable et élastique et d'assurer ainsi un support efficace qui permet de réduire la friction des ballastes et d'éviter les frictions excessives de ces ballastes qui pourraient entraîner une déformation géométrique excessive de la voie ferrée.

La composition selon l'invention comprend 10 à 50% d'une ou plusieurs résines de PVC de Kwert compris entre 50 et 100. Une résine PVC présentant un Kwert compris entre 50 et 1000 peut être obtenue par un procédé en suspension ou en masse. Du PVC fabriqué par un procédé en émulsion ou en microsuspension peut aussi être utilisé.

Le(s) plastifiant(s) mis en oeuvre dans la semelle d'appui objet de l'invention, est (sont) choisi(s) dans le groupe comprenant des azélates, trimellitates, sébaçates, adipates, phtalates, citrates, benzoates, tallates, glutarates, fumarates, maléates, oléates, palmitates, acétates, huile de soja époxydée et leurs mélanges.

Selon un mode de réalisation préféré, la semelle d'appui comprend au moins 40 parties en poids de plastifiant, avec un maximum de 100 parties en poids de plastifiant, pour 100 parties en poids de résine PVC ou de mélange de résines PVC.

Le composé thermoplastique polyuréthane mis en oeuvre dans la semelle d'appui objet de l'invention est de préférence un composé thermoplastique élastomère polyuréthane aromatique ou aliphatique. Il peut être obtenu à partir de composés choisis parmi des polyesters, des polyéthers, des polyetheresters, des polycaprolactone copolyester, des copolymères polyéthers.

La semelle d'appui objet de l'invention, qui est un alliage de composé thermoplastique à base de PVC plastifié et de composé thermoplastique élastomère de type polyuréthane thermoplastique, peut comprendre en outre d'autres polymères à base souple.

En particulier, la semelle d'appui objet de l'invention peut comprendre, en poids par rapport au poids total de la semelle 0,1 à 20 % d'un caoutchouc nitrile.

De plus, La semelle d'appui objet de l'invention peut comprendre, en poids par rapport au poids total de la semelle 0,1 à 10 % d'additifs, choisis parmi des pigments ou charge, des stabilisants, des anti-oxydants, des additifs de mise en oeuvre, des lubrifiants ou des agents ignifugeants. En particulier, parmi les additifs communément utilisés dans des compositions à base de résine vinylique, on peut citer des sels métalliques d'acide carboxylique organique, des acides phosphorique organique, des zéolites, des hydrotalcites, des composés époxidés, des béta-dicétones, des alcools polyhydriques, des antioxydants phosphorés, soufrés ou phénolique, des absorbeurs ultraviolet par exemple des benzophenones, benzotriazoles, et dérivés d'oxanilide, des cyanoacrylates, des stabilisants lumière à amine encombrées de type HALS (hindered amine light stabilizer), des sels d'acide perchlorique, et d'autres composés inorganiques à base de métaux, des lubrifiants par exemple des cires organiques, des alcools gras, des acides gras, des esters, des sels métalliques, des charges par exemple de la craie ou du talc, des agents d'expansion par exemple des azodicarbonamides, et des pigments tels que le noir de carbone, les phtalocyanines de cuivre.

Selon un mode de réalisation particulier, la semelle d'appui comprend un mélange de polychlorure de vinyle (PVC), de polyuréthane thermoplastique (TPU), et d'autres types de polymères compatibles, choisi parmi les élastomères dérivés nitriles (type NBR) possiblement réticulés, les copolymères ou terpolymères chlorure de vinyle et acétate de vinyle (VC/VA) ou chlorure de vinyle et dérivé acrylique (VC/DA), les polyétheresters thermoplastiques, les copolymères ethylène/monomère vinylique (EVA), les terpolymères éthylène/monomère vinylique/carbonyle, les élastomères acryliques, les copolymères à blocs polyamide et à blocs polyéther ou polyétherblockamides, les polyéthylènes chlorés ou chlorosulfonés, les polymères éthylène/(méth)acrylate d'alkyle ou acide (méth)acrylique fonctionnalisés ou non, les polymères core-shell type MBS ou ABu-MAM, le PVDF et les résines polyamides.

La semelle d'appui objet de l'invention permet de garantir une bonne conservation de la rigidité statique d'une pièce soumise à des sollicitations extrêmes.

Le mode de transformation utilisé pour obtenir cette semelle d'appui est préférentiellement l'extrusion dans une gamme de température entre 100 °C et 180°C, voir 220°C

### Exemples

Afin de simuler les extrêmes sollicitations rencontrées, par une semelle d'appui de traverses de chemin de fer, le protocole décrit ci-après est appliqué.

Les essais suivants ont été réalisés sur des échantillons de composition de 6mm d'épaisseur, sur une machine hydraulique de traction-compression pouvant être asservie en effort. Elle doit être équipée d'un capteur d'effort (de capacité 10kN et de précision 1 N) et d'un capteur de déplacement. Les échantillons ont été préparés à partir d'un mélange des différentes matières premières travaillées, dans des proportions telles que définies dans le tableau ci-dessous sur un mélangeur bi-cylindre à 150°C pendant 5 minutes. Puis la matière obtenue a été compressée sous presse à 190°C sous une pression de 200 bars pendant 90 secondes.

L'essai consiste en une mesure de la variation de la rigidité statique du matériau après 1 million de cycles. La rigidité statique initiale est mesurée après avoir appliqué 3 cycles de compression entre 0 et 0,25MPa, à vitesse de 0,01 MPa/s.

Puis le matériau subit une sollicitation en compression à la fatigue: 1 million de cycles entre 0,01 Mpa, et 0,5MPa à une fréquence de 5Hz.

La rigidité statique finale est mesurée après avoir appliqué 3 cycles de compression entre 0 et 0,25MPa, à vitesse de 0,01 MPa/s.

La rigidité étant le rapport entre effort mesuré en Newton et variation d'épaisseur mesurée en mm. Les semelles d'appui de chemin de fer conformes à l'invention permettent d'obtenir une variation de la rigidité statique (avant et après sollicitation à la fatigue) inférieure à 20%.

Dans les exemples ci dessous, les abréviations suivantes sont utilisées :
TPU : thermoplastique polyuréthane de type copolymère de polyéther commercialisé par la société Merquinsa® sous la dénomination commerciale Pearlthane® D15N70.
PVC : Résine masse PVC de K-Wert 80.
Plastifiant : Diisononylphtalate
NBR : caoutchouc butadiène acrylonitrile commercialisé par la société Eliokem® sous la dénomination commerciale Chemigum® P35

**Tableau 1**

| | 1 | 2 | 3 | 4 | 5 | 6 |
|---|---|---|---|---|---|---|
| PVC | 51% | 41,4% | 41,6% | 44,1% | 31% | 29,3% |
| Plastifiant | 43,3% | 35,2% | 37,4% | 37,5% | 24,8% | 22,8% |
| TPU | | | | 13,2% | 40,3% | 39,5% |
| NBR | | 18,6% | 21,6% | | | 4,4% |
| Variation de rigidité | >50% | >50% | >50% | Entre 20 et 50% | <20% | <20% |

## Revendications

1. semelle d'appui pour traverses de chemin de fer comprenant, en poids, par rapport au poids total de ladite semelle :
- 10 à 50% en poids d'une ou plusieurs résines PVC de Kwert compris entre 50 et 100 ;
- 10 à 45% en poids d'un ou plusieurs plastifiants ;
- 15 à 60% en poids d'un composé thermoplastique polyuréthane.

2. Semelle d'appui selon la revendication 1, **caractérisée en ce qu'**elle comprend au moins 40 parties en poids de plastifiant pour 100 parties en poids de résine PVC ou de mélange de résines PVC.

3. Semelle d'appui selon la revendication 1 ou 2, **caractérisée en ce que** Le(s) plastifiant(s) mis en oeuvre dans la semelle d'appui objet de l'invention, est (sont) choisi(s) dans le groupe comprenant des azélates, trimellitates, sébaçates, adipates, phtalates, citrates, benzoates, tallates, glutarates, fumarates, maléates, oléates, palmitates, acétates, huile de soja époxydée et leurs mélanges.

4. Semelle d'appui selon l'une quelconque des revendications 1 à 3 **caractérisée en ce que** le composé thermoplastique polyuréthane est aromatique ou aliphatique, et est obtenu à partir de composés choisis parmi des polyesters, des polyéthers, des polyetheresters, des polycaprolactone copolyester, des copolymères polyéthers.

5. Semelle d'appui selon l'une quelconque des revendications 1 à 4, **caractérisé en ce qu'**elle peut comprendre, en poids par rapport au poids total de la semelle, 0,1 à 20 % d'un caoutchouc nitrile.

6. Semelle d'appui selon l'une quelconque des revendications 1 à 5, comprenant en outre 0,1 à 10 % d'additifs, choisis parmi des pigments, des charges, des stabilisants, des anti-oxydants, des additifs de mise en oeuvre, des lubrifiants et des agents ignifugeants

## Patentansprüche

1. Stützsohle für Eisenbahnschwellen, aufweisend, nach Gewicht, bezogen auf das Gesamtgewicht der genannten Unterlage:
- 10 bis 50 Gewichts-% von einem oder mehreren PVC-Harzen, welche einen K-Wert zwischen 50 und 100 aufweisen;
- 10 bis 45 Gewichts-% von einem oder mehreren Weichmachern;
- 15 bis 60 Gewichts-% von einer Mischung thermoplastischer Polyurethane.

2. Stützsohle gemäß dem Anspruch 1, **dadurch gekennzeichnet, dass** sie mindestens 40 Gewichtsteile Weichmacher je 100 Gewichtsteile PVC-Harz oder PVC-Harz-Mischung aufweist.

3. Stützsohle gemäß dem Anspruch 1 oder 2, **dadurch gekennzeichnet, dass** der/die Weichmacher, welche in der Unterlage, welche Gegenstand der Erfindung ist, verarbeitet sind, aus der Gruppe, die Azelate, Trimellitate, Sebacate, Adipate, Phthalate, Citrate, Benzoate, Tallate, Glutarate, Fumarate, Maleate, Oleate, Palmitate, Acetate, epoxidiertes Sojaöl und deren Mischungen aufweist, ausgewählt ist/sind.

4. Stützsohle gemäß irgendeinem der Ansprüche 1 bis 3, **dadurch gekennzeichnet, dass** die Mischung thermoplastischer Polyurethane aromatisch oder aliphatisch ist und aus Mischungen erhalten wird, welche aus Polyestern, Polyethern, Polyetherestern, Polycaprolacton-Copolyestern, Polyether-Copolymeren ausgewählt sind.

5. Stützsohle gemäß irgendeinem der Ansprüche 1 bis 4, **dadurch gekennzeichnet, dass** sie nach Gewicht, bezogen auf das Gesamtgewicht der Sohle, 0,1 bis 20 % eines Nitrilkautschuks aufweisen kann.

6. Stützsohle gemäß irgendeinem der Ansprüche 1 bis 5, ferner aufweisend 0,1 bis 10 % von Additiven, welche aus Pigmenten, Füllstoffen, Stabilisatoren, Antioxidantien, Additiven zur Verarbeitung, Schmiermitteln und Flammschutzmitteln, ausgewählt sind.

## Claims

1. Support pad for railway sleepers, comprising, in terms of weight relative to the total weight of said pad:
- 10 to 50 % by weight of one or more PVC resins having a K value of from 50 to 100;
- 10 to 45 % by weight of one or more plasticisers;
- 15 to 60 % by weight of a thermoplastic polyurethane compound.

2. Support pad according to claim 1, **characterised in that** it comprises at least 40 parts by weight of plasticiser per 100 parts by weight of PVC resin or mixture of PVC resins.

3. Support pad according to claim 1 or 2, **characterised in that** the plasticiser(s) employed in the support pad of the invention is/are selected from the group comprising azelates, trimellitates, sebacates, adipates, phthalates, citrates, benzoates, tallates, glutarates, fumarates, maleates, oleates, palmitates, acetates, epoxidised soybean oil and mixtures thereof.

4. Support pad according to any one of clams 1 to 3, **characterised in that** the thermoplastic polyurethane compound is aromatic or aliphatic and is obtained starting from compounds selected from polyesters, polyethers, polyether esters, polycaprolactone copolyester and polyether copolymers.

5. Support pad according to any one of claims 1 to 4, **characterised in that** it may comprise, in terms of weight relative to the total weight of the pad, 0.1 to 20 % of nitrile rubber.

6. Support pad according to any one of claims 1 to 5, additionally comprising 0.1 1 to 10 % of additives selected from pigments, fillers, stabilisers, anti-oxidants, processing additives, lubricants and fireproofing agents.
